# DEMANDE DE BREVET EUROPEEN

(11) **EP 1 669 633 A1**
(43) Date de publication de la demande: **14.06.2006**
(21) Numéro de dépôt: 05292499.0
(22) Date de dépôt: 25.11.2005
(51) Int. Cl.: F16F 13/10

(54) **Dispositif anti-vibratoire hydraulique à entretoise**

(30) Priorité: 09.12.2004 FR 0413140
(71) Demandeur: HUTCHINSON, 75008 Paris (FR)
(72) Inventeur: Petit, Jean-Claude, 28200 Chateaudun (FR); Meunier, David, 28200 Chateaudun (FR); Roquain, Christophe, 72120 Ecorpain (FR)
(74) Mandataire: Burbaud, Eric

(57) **Abrégé**

Dispositif antivibratoire hydraulique comportant : deux armatures rigides, une chambre de travail et une chambre de compensation communicant entre elles par un passage étranglé, un clapet de découplage étant disposé entre ces deux chambres, ce clapet étant déplaçable avec un faible débattement, au moins une cloison rigide ajourée séparant ces deux chambres, cette cloison étant obturée par le clapet, le clapet se présentant sous la forme d'une plaquette en matériau élastiquement déformable et étant disposé dans une ouverture d'une entretoise (9) pincée entre deux grilles (1,2)planes parallèles, respectivement disposées dans la chambre de travail et la chambre de compensation, le débattement du clapet (11) entre les grilles (1, 2) étant défini par l'épaisseur de l'entretoise (9).

## Description

La présente invention est relative aux dispositifs antivibratoires hydrauliques destinés à être interposés, aux fins d'amortissement et de liaison, entre deux éléments rigides tels que notamment châssis et moteur de véhicule.

L'invention concerne plus particulièrement, parmi ces dispositifs, ceux qui comportent deux armatures, un corps en élastomère reliant les deux armatures:
- une chambre de travail, délimitée au moins partiellement par le corps en élastomère ;
- une chambre de compensation ;
- un passage étranglé faisant communiquer les deux chambres entre elles, ces deux chambres ainsi que le passage étant remplis de liquide ;
- un clapet de découplage disposé entre les deux chambres, ce clapet étant déplaçable avec un faible débattement, typiquement parallèlement à l'axe central du dispositif ;
- une cloison rigide ajourée séparant les deux chambres, obturée par le clapet.

Comme on le sait, avec un tel dispositif, une vibration de fréquence élevée et de faible amplitude telle que celles dues au fonctionnement au ralenti du moteur, se traduit par une succession rapide de déformations alternatives du clapet perpendiculairement à lui-même, susceptibles d'atténuer la transmission des vibrations en cause.

Au contraire, pour des oscillations d'amplitude plus élevées et de fréquence plus basse, telles que celles dues aux irrégularités et variations de déclivité du sol (« hachis »), lors de la circulation du véhicule sur ce sol, l'amplitude des déformations du clapet atteint sa valeur maximum possible et le liquide est refoulé de l'une des deux chambres dans l'autre et inversement à travers le passage étranglé, avec mise en résonance de la masse liquide ainsi refoulée lorsque la fréquence des oscillations atteint une valeur prédéterminée qui est fonction du rapport entre la longueur axiale et la section droite du passage étranglé.

Ainsi, le passage étranglé permet les transferts de liquide entre les deux chambres pour l'amortissement hydraulique de mouvements axiaux de basse fréquence (par exemple inférieurs à 20 Hz) et de grande amplitude (par exemple supérieure à 0,5 mm).

Le clapet de découplage permet quant à lui l'absorption des vibrations axiales de relativement grande fréquence (par exemple supérieure à 20 Hz) et de faible amplitude (par exemple inférieure à 0,5 mm)

Un tel dispositif antivibratoire hydraulique est divulgué par exemple dans le document FR-2 751 042. La cloison rigide y est horizontale, métallique et divise le boîtier en une chambre de travail du côté d'un corps en élastomère en forme de cloche, et une chambre de compensation du côté d'un soufflet. Dans cette réalisation antérieure, ce clapet est formé d'une plaquette en élastomère montée avec un faible jeu entre deux grilles parallèles de la cloison intermédiaire. Le canal étranglé est délimité par une coque rigide en fonte d'aluminium moulée, ou bien encore une pièce moulée en matière plastique, et l'ensemble formé par les deux grilles métalliques et la coque rigide en fonte d'aluminium est assemblé par sertissage.

La fabrication des éléments de cloison des dispositifs de l'art antérieur s'avère coûteuse : les grilles perforées doivent être aussi planes et parallèles que possible et écartées d'une valeur prédéterminée pour que le débattement du clapet soit efficace dans son atténuation des vibrations.

Certains moteurs, en particulier ceux dits peu vibrants,nécessitent un jeu de découplage précis et faible, et donc un contrôle précis de l'écartement et de la planéité des disques perforés, des composants en alliage d'aluminium, coûteux, étant conventionnellement employés dans de tels cas.

Mais la maîtrise de la planéité des grilles en alliage de fonderie est délicate du fait du poinçonnage de ces grilles et du retrait, en particulier pour les grilles en alliage d'aluminium.

La demanderesse s'est attachée à résoudre ces problèmes, en proposant de plus une structure qui soit de montage aisé.

A ces fins, l'invention se rapporte, selon un premier aspect, à un dispositif antivibratoire hydraulique destiné à être interposé entre deux éléments, comportant deux armatures rigides solidarisables respectivement avec deux éléments rigides à réunir, ce dispositif comprenant une chambre de travail et une chambre de compensation, un passage étranglé faisant communiquer les deux chambres entre elles, ces deux chambres ainsi que le passage étant remplis de liquide, le dispositif comprenant un clapet de découplage disposé entre les deux chambres, ce clapet étant déplaçable avec un faible débattement, typiquement parallèlement à l'axe central du dispositif, au moins une cloison rigide ajourée séparant les deux chambres, cette cloison étant obturée par le clapet, le clapet se présentant sous forme d'une plaquette en matériau élastiquement déformable disposée dans une ouverture d'une entretoise pincée entre une première grille et une deuxième grille, les deux grilles planes parallèles étant respectivement disposées dans la chambre de travail et la chambre de compensation, le débattement du clapet entre les grilles étant défini par l'épaisseur de l'entretoise.

Suivant diverses réalisations, le dispositif présente les caractères suivants, le cas échant combinés :
- le passage étranglé faisant communiquer en permanence la chambre de travail et la chambre de compensation est formé par un canal venu de matière avec l'entretoise ;
- le canal s'étend sensiblement perpendiculairement et de part et d'autre du plan moyen de la plaque entretoise ;
- les deux grilles ajourées sont de formes et dimensions sensiblement identiques ;
- le clapet présente une forme générale de disque plan ;
- le clapet est pourvu de bossages faisant saillie sur au moins une de ses deux faces.

Dans une mise en oeuvre particulière, l'entretoise est venue de matière avec l'une des deux grilles ajourée. L'assemblage est ainsi facilité par déformation à froid ou à chaud.

Dans une autre mise en oeuvre, les deux grilles ajourées sont réalisées en tôle embouties, l'entretoise étant réalisée en matériau polymère et le clapet étant réalisé en élastomère.

Par rapport aux composants en alliage d'aluminium fondu, relativement chers, les tôles en acier embouties offrent de plus l'avantage d'un meilleur contrôle de planéité.

Selon une autre réalisation, l'ensemble formé par les grilles, l'entretoise et le clapet est assemblé en mettant en oeuvre au moins une des méthodes suivantes : clipsage, assemblage tôle/tôle, déformation à chaud, déformation à froid, bouterollage.

D'autres objets et avantages de l'invention apparaîtront au cours de la description suivante de modes de réalisation, description qui va être effectuée en se référant aux dessins annexés dans lesquels :

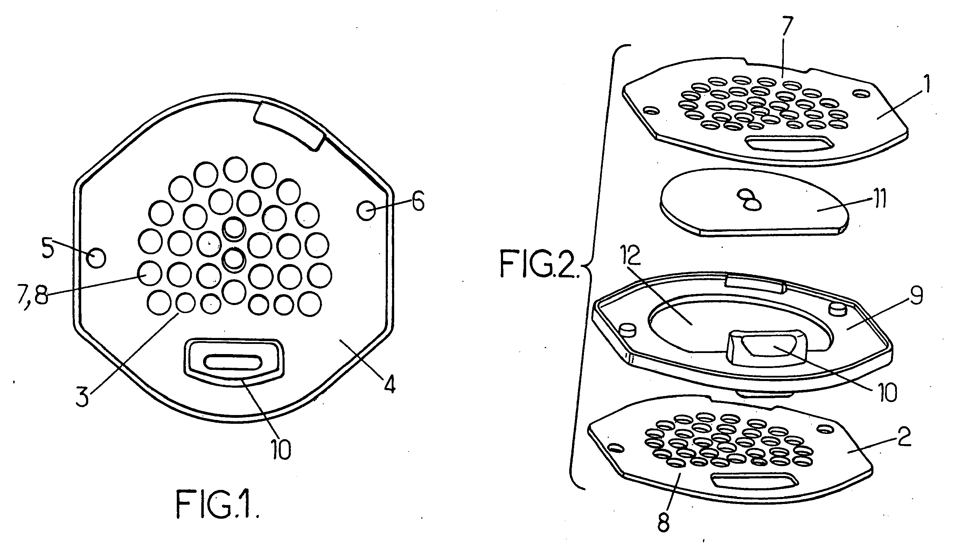

- la figure 1 est une vue de face d'un ensemble selon un mode de réalisation de l'invention, vu en position monté ;
- la figure 2 est une vue en perspective éclatée des pièces formant l'ensemble représenté en figure 1.

Dans la description qui va suivre, les termes tels que « haut », « bas », « inférieur », « supérieur », « vertical », « horizontal », sont utilisés dans le seul but de rendre plus simple et plus claire la description, en se référant à la position d'utilisation habituelle du dispositif de l'invention, mais ces termes ne sont pas limitatifs.

L'ensemble de découplage de dispositif antivibratoire hydraulique représenté sur les figures comprend deux grilles 1, 2, réalisées par exemple en alliage métallique tel qu'acier. Ces deux grilles peuvent être identiques, à savoir une grille horizontale supérieure 1 et une grille horizontale inférieure 2.

Dans une réalisation, ces grilles 1, 2 sont d'épaisseur sensiblement constante et comportent une partie centrale perforée 3 et une partie périphérique 4 pleine pourvue d'orifices de fixation 5, 6 et de trous traversant 7,8 pour le passage du fluide.

L'ensemble de découplage comprend par ailleurs une entretoise 9 en matériau polymère.

Dans la réalisation représentée, l'entretoise est pourvu d'un canal 10 formant passage étranglé pour le fluide, entre chambre de travail et chambre de compensation.

Ce canal 10 peut présenter des dimensions adaptées pour une fréquence de résonance de l'ordre de 10 à 20 Hz , de sorte à permettre l'amortissement des mouvements de hachis dus au roulage d'un véhicule, ou une fréquence de résonance adaptée à l'amortissement des vibrations de ralenti de moteur de véhicule. Dans une réalisation, ce canal est venu de matière avec le corps de l'entretoise. Il s'étend sensiblement perpendiculairement et de part et d'autre de l'entretoise.

Les deux grilles ajourées 1, 2 sont de formes et dimensions sensiblement identiques, cette disposition étant avantageuse en matière de coût de fabrication et de contrôle qualité.

Le clapet 11 logé dans l'ouverture 12 de l'entretoise présente une forme générale de disque plan.

Dans certaines réalisations, le clapet est pourvu de bossages faisant saillie sur au moins une de ses deux faces.

Dans une mise en oeuvre particulière, l'entretoise est venue de matière avec une des deux grilles ajourée. Un assemblage des grilles et de l'entretoise peut ainsi être obtenu par déformation à froid ou à chaud.

Dans une autre mise en oeuvre, les deux grilles ajourées 1, 2 sont réalisées en tôle embouties, l'entretoise étant réalisée en matériau polymère et le clapet 11 étant réalisé en élastomère.

Par rapport aux composants en alliage d'aluminium fondu, relativement chers, les tôles en acier embouties offrent de plus l'avantage d'un meilleur contrôle de planéité.

Selon une autre réalisation, l'ensemble formé par les grilles, l'entretoise et le clapet est assemblé en mettant en oeuvre au moins une des méthodes suivantes : clipsage, assemblage tôle/tôle, déformation à chaud, déformation à froid, bouterollage.

L'invention qui vient d'être présentée concerne les supports antivibratoires de type bi-mode ou actifs. Elle trouve un intérêt particulier dans le support de moteurs peu vibrants nécessitant un jeu de découplage précis. Le montage permet en outre d'intégrer à moins coût une colonne ralenti.

## Revendications

1. Dispositif antivibratoire hydraulique destiné à être interposé entre deux éléments, comportant deux armatures rigides solidarisables respectivement avec deux éléments rigides à réunir, ce dispositif comprenant une chambre de travail et une chambre de compensation, un passage étranglé faisant communiquer les deux chambres entre elles, ces deux chambres ainsi que le passage étant remplis de liquide, le dispositif comprenant un clapet de découplage disposé entre les deux chambres, ce clapet étant déplaçable avec un faible débattement, au moins une cloison rigide ajourée séparant les deux chambres, cette cloison étant obturée par le clapet, ce clapet (11) se présentant sous la forme d'une plaquette en matériau élastiquement déformable, **caractérisé en ce que** le clapet (11) est disposé dans une ouverture d'une entretoise (9) pincée entre une première grille et une deuxième grille (1,2), les deux grilles planes parallèles étant respectivement disposées dans la chambre de travail et la chambre de compensation, le débattement du clapet (11) entre les grilles (1, 2) étant défini par l'épaisseur de l'entretoise (9),le passage étranglé faisant, communiquer en permanence la chambre de travail et la chambre de compensation, étant formé par un canal (10) venu de matière avec l'entretoise.

2. Dispositif antivibratoire selon la revendication 1, **caractérisé en ce que** le canal (10) s'étend sensiblement perpendiculairement et de part et d'autre du plan moyen de la plaque entretoise (9).

3. Dispositif antivibratoire selon l'une quelconque des revendications 1 ou 2, **caractérisé en ce que** les deux grilles (1,2) ajourées sont de formes et dimensions sensiblement identiques.

4. Dispositif antivibratoire selon l'une quelconque des revendications précédentes, **caractérisé en ce que** le clapet (11) présente une forme générale de disque plan.

5. Dispositif antivibratoire selon l'une quelconque des revendications précédentes, **caractérisé en ce que** le clapet (11) est pourvu de bossages faisant saillie sur au moins une de ses deux faces.

6. Dispositif antivibratoire selon l'une quelconque des revendications précédentes, **caractérisé en ce que** l'entretoise (9) est venue de matière avec une des deux grilles ajourées (1,2).

7. Dispositif antivibratoire selon l'une quelconque des revendications 1 à 5, **caractérisé en ce que** les deux grilles ajourées (1, 2) sont réalisées en tôle emboutie, l'entretoise (9) étant réalisée en matériau polymère et le clapet (11) étant réalisé en élastomère.

8. Dispositif antivibratoire selon l'une quelconque des revendications précédentes, **caractérisé en ce que** l'ensemble formé par les grilles (1, 2), l'entretoise (9) et le clapet (11) est assemblé en mettant en oeuvre au moins une des méthodes suivantes : clipsage, assemblage tôle/tôle, déformation à chaud, déformation à froid, bouterollage.
